# EUROPÄISCHE PATENTSCHRIFT

(11) **EP 1 388 681 B1**
(45) Veröffentlichungstag und Bekanntmachung des Hinweises auf die Patenterteilung: **11.01.2012**
(21) Anmeldenummer: 03017138.3
(22) Anmeldetag: 29.07.2003
(51) Int. Cl.: F16D 13/75

(54) **Druckplattenbaugruppe mit automatischem Verschleissausgleich**
Pressure plate assembly with automatic wear adjusting device
Ensemble plateau de pression muni d'un rattrapage de jeu automatique

(30) Priorität: 10.08.2002 DE 10236832
(43) Veröffentlichungstag der Anmeldung: 11.02.2004
(73) Patentinhaber: ZF Sachs AG, 97424 Schweinfurt (DE)
(72) Erfinder: Lindner, Joachim, Dipl.-Ing., 97456 Dittelbrunn (DE); Weidinger, Reinhold, Dipl.-Ing. (FH), 97509 Unterspiesheim (DE)

(56) Entgegenhaltungen:
- DE-C- 19 651 633
- DE-C- 19 831 008
- US-A- 4 207 972

## Beschreibung

Die vorliegende Erfindung betrifft eine Druckplattenbaugruppe, umfassend eine Gehäuseanordnung, eine in der Gehäuseanordnung in Richtung einer Drehachse bewegbar gehaltene Anpressplatte, eine sich bezüglich der Gehäuseanordnung und der Anpressplatte abstützende Kraftbeaufschlagungsanordnung, vorzugsweise Kraftspeicher, eine Verschleißnachstellvorrichtung im Kraftübertragungsweg zwischen der Anpressplatte und der Kraftbeaufschlagungsanordnung, umfassend wenigstens ein zur Verschleißnachstellung verlagerbares Nachstellelement, ein an der Anpressplatte vorgesehenes Blockier/Erfassungselement, das mit einem Erfassungsabschnitt bei Auftreten von Verschleiß in Anlage an einem Anschlag kommen kann und bezüglich der Anpressplatte bewegbar ist, ein keilartiges Arretierelement, welches das Blockier/Erfassungs-Element nach Bewegung bezüglich der Anpressplatte gegen Rückbewegung arretiert, wobei das Arretierelement durch eine Vorspannanordnung in Richtung zu einem das Blockier/Erfassungs-Element gegen Rückbewegung arretierenden Zustand vorgespannt ist. Eine derartige Druckplattenbaugruppe ist aus der DE-A-19910858 bekannt.

Bei derartigen Druckplattenbaugruppen wird die Arretierwirkung des Arretierelement im Allgemeinen dadurch erzeugt, dass es durch Vorspannwirkung, im Allgemeinen einer Vorspannfeder, in einen zwischen dem Blockier/Erfassungs-Element und der Anpressplatte gebildeten Zwischenraum vorgespannt ist, wobei dieser Zwischenraum mit zunehmendem Verschleiß sich vergrößert und in entsprechender Weise das keilartig ausgebildete Arretierelement sich verlagern kann und somit ständig tiefer eintaucht. Durch die das Arretierelement in den angesprochenen Zwischenraum beaufschlagende Vorspannwirkung wird jedoch auch auf das Blockier/Erfassungs-Element eine Kraft ausgeübt, und zwar eine Kraft, welche dieses in einer Richtung, in welcher es sich auch verschleißbedingt bezüglich der Anpressplatte bewegen würde, verlagern würde. Würde eine derartige Verlagerung auftreten, hätte dies möglicherweise eine ohne dem Vorliegen von Verschleiß durchgeführte Kompensations- oder Nachstellbewegung des wenigstens einen Nachstellelements zur Folge. Um dem entgegenzutreten, kann das im Allgemeinen blattfederartig ausgebildete Blockier/Erfassungs-Element mit einer derartigen Eigenvorspannkraft bereitgestellt werden, dass das Arretierelement eine derartige ungewünschte Bewegung des Blockier/Erfassungs-Elements nicht induzieren kann. Das Bereitstellen des Blockier/Erfassungs-Elements mit entsprechend großer Steifigkeit führt jedoch zu dem Problem, dass bei Anlage an dem Anschlag das Blockier/Erfassungs-Element entgegen dieser eigenen Steifigkeit verformt werden muss, so dass beim Einrückvorgang, bei welchem eine derartige Beaufschlagung des Blockier/Erfassungs-Elements im Allgemeinen. auftreten wird, eine der Verlagerung der Anpressplatte, welche das Blockier/Erfassungs-Element trägt, entgegenwirkende Kraftkomponente. erzeugt wird.

Es ist die Aufgabe der vorliegenden Erfindung, eine Druckplattenbaugruppe bereitzustellen, bei welcher ohne der Beeinflussung der Kuppelcharakteristik das Auftreten ungewünschter Verschleißnachstellvorgänge vermieden werden kann.

Gemäß der vorliegenden Erfindung wird diese Aufgabe gelöst durch eine Druckplattenbaugruppe, umfassend eine Gehäuseanordnung, eine in der Gehäuseanordnung in Richtung einer Drehachse bewegbar gehaltene Anpressplatte, eine sich bezüglich der Gehäuseanordnung und der Anpressplatte abstützende Kraftbeaufschlagungsanordnung, vorzugsweise Kraftspeicher, eine Verschleißnachstellvorrichtung im Kraftübertragungsweg zwischen der Anpressplatte und der Kraftbeaufschlagungsanordnung, umfassend wenigstens ein zur Verschleißnachstellung verlagerbares Nachstellelement, ein an der Anpressplatte vorgesehenes Blockier/Erfassungselement, das mit einem Erfassungsabschnitt bei Auftreten von Verschleiß in Anlage an einem Anschlag kommen kann und bezüglich der Anpressplatte bewegbar ist, ein keilartiges Arretierelement, welches das Blockier/Erfassungs-Element nach Bewegung bezüglich der Anpressplatte gegen Rückbewegung arretiert, wobei das Arretierelement durch eine Vorspannanordnung in Richtung zu einem das Blockier/Erfassungs-Element gegen Rückbewegung arretierenden Zustand vorgespannt ist, eine Rückhalteanordnung, welche der Vorspannwirkung der Vorspannanordnung zumindest in einem Zustand entgegenwirkt, in welchem das Blockier/Erfassungs-Element aus einer durch das Arretierelement arretierten Lage bezüglich der Anpressplatte im Wesentlichen nicht herausbewegt ist.

Die erfindungsgemäße Druckplattenbaugruppe weist also zusätzlich eine Rückhalteanordnung auf, welche dafür sorgt, dass dann, wenn eine verschleißinduzierte Auslenkung bzw. Bewegung des Blockier/Erfassungs-Elements bezüglich der Anpressplatte nicht vorhanden ist, also dieses beispielsweise durch die Wirkung des Arretierelements in einer im Wesentlichen konstanten Lage bezüglich der Anpressplatte gehalten werden soll, eine der Vorspannanordnung entgegenwirkende Kraft aufgebaut wird, so dass das Arretierelement keine oder nur eine vergleichsweise geringe das Blockier/Erfassungs-Element im Sinne einer Bewegung, wie sie auch bei Auftreten von Verschleiß induziert werden würde, beaufschlagende Kraftwirkung erzeugen kann. Nur dann, wenn durch Anlage an dem Anschlag das Blockier/Erfassungs-Element tatsächlich bezüglich der Anpressplatte bewegt bzw. ausgelenkt wird, kann das Arretierelement der Vorspannwirkung der Vorspannanordnung bei aufgehobener oder verminderter Kraftwirkung der Rückhalteanordnung folgen und wieder dafür sorgen, dass das Blockier/Erfassungs-Element sich nicht wieder zurück bewegen kann.

Beispielsweise kann vorgesehen sein, dass die Rückhalteanordnung der Vorspannwirkung durch Formschluss entgegenwirkt. Dies kann dadurch realisiert sein, dass die Rückhalteanordnung einen stufenartig sich verjüngenden Keilbereich des Arretierelements umfasst, wobei an dem Arretierelement vorgesehene Rückhaltestufen in Anlage an dem Blockier/Erfassungs-Element kommen können. Immer dann, wenn also verschleißbedingt das Blockier/Erfassungs-Element derart ausgelenkt wird, dass es über eine der Rückhaltestufen hinwegtritt, wird kurzzeitig die Rückhaltewirkung der Rückhalteanordnung aufgehoben und das Arretierelement kann sich bewegen, bis die nächste Rückhaltestufe am Blockier/Erfassungs-Element zur Anlage kommt.

Bei einer alternativen Ausgestaltungsform kann die Formschlusswirkung dadurch erzielt werden, dass das Arretierelement an seinem bezüglich der Anpressplatte abgestützten Bereich eine Verzahnungsformation aufweist und dass an der Anpressplatte oder einem daran getragenen Bauteil eine mit der Verzahnungsformation in Eingriff stehende oder bringbare Gegen-Verzahnungsformation ausgebildet ist. Hier wird also immer dann, wenn durch Auftreten von Verschleiß das Blockier/Erfassungs-Element sich bezüglich der Anpressplatte bewegt und dabei das Arretierelement entlastet, bedingt durch die Vorspannwirkung der Vorspannanordnung dafür gesorgt werden, dass die Verzahnungen kurzzeitig außer Eingriff treten, so dass das Arretierelement sich in einen Zustand bewegen kann, in welchem es das Blockier/Erfassungs-Element wieder zuverlässig gegen Zurückbewegung sichert.

Gemäß einer weiteren alternativen Ausgestaltungsform kann vorgesehsen sein, dass die Rückhalteanordnung der Vorspannwirkung durch Reibschluss entgegenwirkt. Dies kann beispielsweise dadurch realisiert sein, dass an der Anpressplatte eine das Arretierelement aufnehmende Nut vorgesehen ist, in welche das Arretierelement zumindest im Arretierzustand reibschlüssig eingreift. Der Vorteil dieser Ausgestaltungsform ist, dass sie eine kontinuierliche, also stufenlose Bewegung des Arretierelements bei Auftreten von Verschleiß und eine dementsprechend stufenlose Einstellung der Lage des Blockier/Erfassungs-Elements bezüglich der Anpressplatte ermöglicht.

Die Reibschlusswirkung kann in vorteilhafter Weise dadurch erlangt werden, dass die Nut zu ihrem Nutgrund hin sich verjüngend ausgebildet ist.

Bei der erfindungsgemäßen Druckplattenbaugruppe kann der Aufbau weiter derart sein, dass das Blockier/Erfassungs-Element einen an der Anpressplatte festgelegten blattfederartig ausgebildeten Körperabschnitt aufweist, von welchem ein in Anlage an dem Anschlag bringbarer Blockier/Erfassungs-Abschnitt ausgeht, wobei das Arretierelement mit dem Blockier/Erfassungs-Element im Bereich des Blockier/Erfassungs-Abschnitts zusammenwirkt.

Die vorliegende Erfindung betrifft ferner eine Reibungskupplung, welche eine erfindungsgemäße Druckplattenbaugruppe umfasst.

Die Erfindung wird nachfolgend mit Bezug auf die beiliegenden Zeichnungen anhand bevorzugter Ausgestaltungsformen detailliert beschrieben. Es zeigt:
- Fig. 1: eine Teil-Axialansicht wesentlicher Komponenten einer erfindungsgemäßen Druckplattenbaugruppe;
- Fig. 2: eine Schnittansicht der in Fig. 1 dargestellten Druckplattenbaugruppe, geschnitten längs einer Linie II-II;
- Fig. 3: ein bei der Druckplattenbaugruppe der Fig. 1 und 2 eingesetztes keilschieberartiges Arretierelement;
- Fig. 4: eine der Fig. 1 entsprechende Ansicht einer alternativen Ausgestaltungsform der erfindungsgemäßen Druckplattenbaugruppe;
- Fig. 5: eine Schnittansicht der in Fig. 4 dargestellten Druckplattenbaugruppe, geschnitten längs einer Linie V-V in Fig. 4;
- Fig. 6: das bei der Ausgestaltungsform der Fig. 4 eingesetzte keilschiebeartige Arretierelement;
- Fig. 7: eine der Fig. 2 bzw. der Fig. 5 entsprechende Ansicht einer weiteren alternativen Druckplattenbaugruppe.

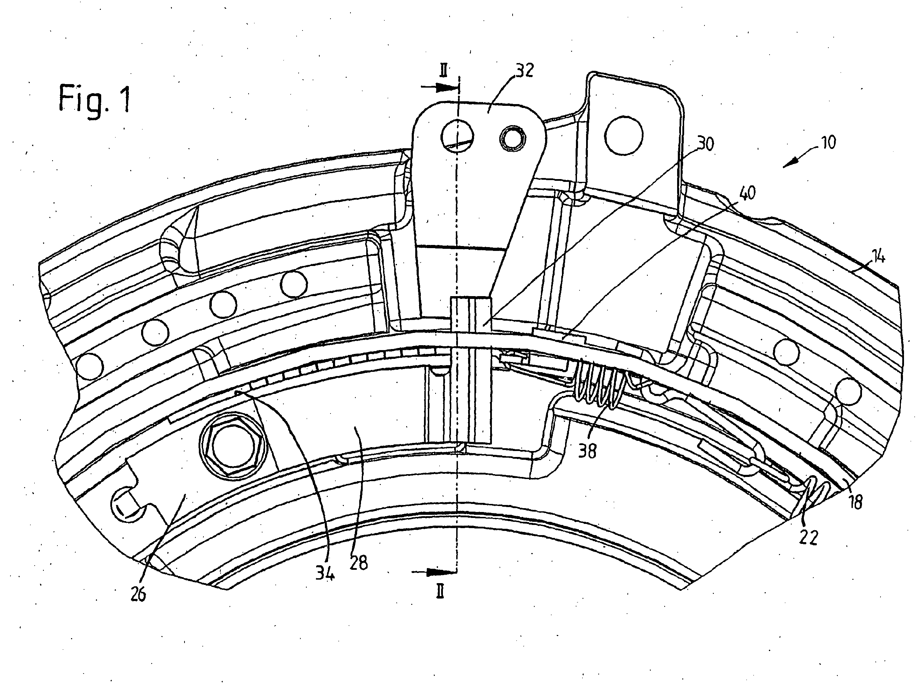

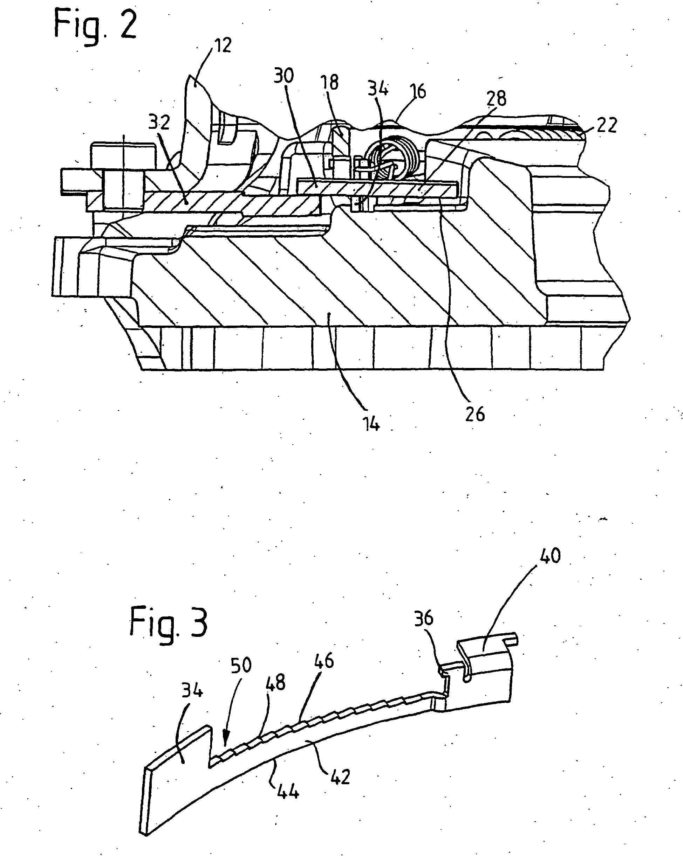

In den Fig. 1 bis 3 ist eine erste Ausgestaltungsform einer erfindungsgemäßen Druckplattenbaugruppe 10 dargestellt. Diese umfasst eine in Fig. 2 nur schematisch dargestellte und beispielsweise mit einem Schwungrad oder dergleichen drehfest verbindbare Gehäuseanordnung 12. In der Gehäuseanordnung 12 ist eine Anpressplatte 14 aufgenommen, welche beispielsweise durch eine Mehrzahl von Tangentialblattfedern oder dergleichen in Richtung einer zur Zeichenebene der Fig. 1 orthogonal stehenden Drehachse bewegbar, gegen Drehung bezüglich der Gehäuseanordnung 10 jedoch im Wesentlichen blockiert gehalten ist. Eine nicht dargestellte Kraftbeaufschlagungsanordnung, beispielsweise Kraftspeicher, stützt sich bezüglich der Gehäuseanordnung einerseits und bezüglich der Anpressplatte 14 andererseits ab und presst damit die Anpressplatte 14 in einer Richtung aus der Gehäuseanordnung 12 heraus auf ein nicht dargestelltes Schwungrad zu. Die Abstützung bezüglich der Anpressplatte 14 erfolgt über eine Verschleißnachstellvorrichtung 16, welche im dargestellten Beispiel einen Verschleißnachstellring 18 umfasst. Der Nachstellring 18 wird durch den Kraftspeicherodereine sonstige Kraftbeaufschlagungsanordnung, beispielsweise Hebelanordnung oder dergleichen, beaufschlagt. Der Nachstellring 18 ist durch eine Feder 22 zur Drehung bezüglich der Anpressplatte 14 vorgespannt, wobei an ihren aneinander anliegenden Oberflächenbereichen der Nachstellring 18 und die Anpressplatte 14 mit Keil- bzw. Rampenflächenformationen ausgebildet sind, so dass eine Relativdrehung der beiden Komponenten 18, 14 zu einer Vergrößerung der Axialerstreckung der im Wesentlichen den Nachstellring 18 umfassenden Verschleißnachstellvorrichtung 16 führt. Es ist selbstverständlich möglich, dass die Verschleißnachstellvorrichtung 16 nach zwei bezüglich einander drehbare und zur Drehung bezüglich einander vorgespannte Nachstellringe umfassen kann, die dann an ihren einander zugewandt orientierten Oberflächenbereichen die Keil- bzw. Rampenflächen aufweisen.

An der Anpressplatte 14 ist ein Blockier/Erfassungs-Element 26 festgelegt. Dieses weist einen näherungsweise in Umfangsrichtung sich erstreckenden und in einem Endbereich an der Anpressplatte 14 festgelegten Körperabschnitt 28 auf. In seinem freien Endabschnitt steht von dem Körperabschnitt 28 seitlich, im dargestellten Beispiel nach radial außen, ein Blockier/Erfassungs-Abschnitt 30 ab. Da der Körperabschnitt 28 radial innerhalb der Verschleißnachstellvorrichtung 16 angeordnet ist, durchgreift der Blockier/Erfassungs-Abschnitt 30 eine in dem Nachstellring 18 gebildete Aussparung, wobei dafür gesorgt ist, dass auch bei Umfangsdrehung des Nachstellrings 18 dieser grundsätzlich nicht in Anlage am Blockier/Erfassungs-Abschnitt 30 kommen kann. Der Blockier/Erfassungs-Abschnitt 30 übergreift in seinem radial äußeren Endbereich einen an der Gehäuseanordnung 12 festgelegten plattenartigen Anschlag 32, so dass, wie in Fig. 2 erkennbar, hier in radialer Richtung und in Umfangsrichtung ein bestimmter Überlapp vorhanden ist.

Es ist ferner ein in der Fig. 3 detaillierter dargestellter keilartiger Arretierschieber 34 so angeordnet, dass er an der Innenumfangsseite des Nachstellrings 18 liegt und sich somit gegen diese nach radial außen hin abstützen kann. An einem Hakenabschnitt 36 des Arretierschiebers ist eine Vorspannfeder 38 eingehängt, die sich andernends bezüglich der Feder 22 bzw. des durch diese zur Drehbewegung beaufschlagten Nachstellrings 18 abstützt. Mit einem Blockierabschnitt 40 greift der Arretierschieber 34 durch eine im Nachstellring 18 gebildete Aussparung mit vergleichsweise geringem Umfangsbewegungsspiel hindurch.

Der Arretierschieber 34 weist in seinem zentralen Bereich einen keilartig sich verjüngenden Abschnitt 42 auf. Die Keilform dieses Abschnitts 42 wird im Wesentlichen dadurch erzeugt, dass eine an der Anpressplatte 14 sich abstützende Kante oder Seite 44 im Wesentlichen eben ist, wohingegen eine mit dem Blockier/Erfassungs-Abschnitt 30, wie im Folgenden noch beschrieben, zusammenwirkende Seite 46 dieses Abschnitts sich allmählich der Kante oder Seite 44 annähert. Insbesondere erkennt man in Fig. 3, dass an der Seite 46 der Abschnitt 42 des Arretierschiebers 34 abgestuft ist und eine Mehrzahl von Rückhaltestufen 48 bildet.

Im Folgenden wird die Funktion der vorangehend beschriebenen Druckplattenbaugruppe 10 bei Durchführung eines Verschleißnachstellvorgangs detailliert beschrieben.

Tritt beispielsweise im Bereich der Reibbeläge einer Kupplungsscheibe ein Verschleiß auf, bedeutet dies, dass in der Einrücklage die Anpressplatte 14 sich näher an das Schwungrad heranbewegt, was in der Fig. 2 bedeutet, dass bezüglich der Gehäuseanordnung 12 die Anpressplatte 14 weiter nach unten verschoben ist. Ist der Verschleiß ausreichend groß, kommt der Blockier/Erfassungs-Abschnitt 30 in Anlage am Anschlag 32, so dass das Blockier/Erfassungs-Element 26 im Bereich des Blockier/Erfassungs-Abschnitts 30 der verschleißbedingt weiter auftretenden Verlagerung der Anpressplatte 14 nicht folgen kann. Dabei wird also das Blockier/Erfassungs-Element 26 entgegen seiner eigenen Vorspannkraft bereichsweise bezüglich der Anpressplatte 14 ausgelenkt. Der Arretierschieber 34, welcher unter Umfangsvorspannung der Feder 38 steht, ist zunächst mit einer seiner Rückhaltestufen 48, welche einen wesentlichen Bestandteil einer allgemein mit 50 bezeichneten Rückhalteanordnung bilden, in Umfangsanlage am Blockier/Erfassungs-Abschnitt 30 und ist somit gegen Bewegung in Umfangsrichtung gehalten. Da die zwischen den Rückhaltestufen 48 und dem Blockier/Erfassungs-Abschnitt 30 gebildete Anlagefläche näherungsweise senkrecht zur Krafteinwirkung der Feder 38 steht, wird durch den Arretierschieber 34 auf das Blockier/Erfassungs-Element 26 im Wesentlichen nur eine Umfangskraft ausgeübt, jedoch keine dieses mit seinem Blockier/Erfassungs-Abschnitt 30 in Richtung von der Anpressplatte 14 weg beaufschlagende Krafteinwirkung erzeugt. Diese Kräfteverhältnisse dauern an, bis das Blockier/Erfassungs-Element 26 im Bereich seines Blockier/Erfassungs-Abschnitts 30 so weit bezüglich der Anpressplatte 14 bzw. bezüglich des Arretierschiebers 34 verlagert worden ist, dass eine momentan noch wirksame Rückhaltestufe 48 überschritten wird. Der Arretierschieber 34 kann sich dann unter der Vorspannwirkung der Feder 38 bei zunächst aufgehobener Rückhaltewirkung der Rückhalteanordnung 50 in Umfangsrichtung verlagern, bis er mit der nächstfolgenden Rückhaltestufe 48 am Blockier/Erfassungs-Abschnitt 30 zur Anlage kommt. In diesem Zustand liegt zwischen dem Blockier/Erfassungs-Abschnitt 30 und der Anpressplatte 14 dann ein Bereich größerer Dicke des Arretierschiebers 34, so dass bei nachfolgender Durchführung eines Ausrückvorgangs, bei welchem der Blockier/Erfassungs-Abschnitt 30 sich wieder vom Anschlag 32 entfernt, das Blockier/Erfassungs-Element 26 gegen Zurückbewegung in seine vorher vorhandene Ausgangslage arretiert ist. Bei diesem Ausrückvorgang entlastet die Kraftbeaufschlagungsanordnung gleichzeitig den Nachstellring 18, so dass dieser nunmehr unter der Wirkung der Vorspannfeder 22 sich geringfügig in Umfangsrichtung bewegen kann, und zwar so lange, bis er wieder an dem Blockierabschnitt 40 des Arretierschiebers 34 zur Anlage kommt. Das Ausmaß dieser Umfangsbewegung des Nachstellrings 18 und somit das damit gekoppelte Ausmaß der Axialbewegung des Nachstellrings 18 entspricht dem Ausmaß der zuvor aufgetretenen Umfangsbewegung des Arretierschiebers 34, welches wiederum gekoppelt ist mit dem Ausmaß der Auslenkung des Blockier/Erfassungs-Abschnitts 30 und somit dem in der Reibungskupplung aufgetretenen Verschleiß. Der vorangehend beschriebene Vorgang wiederholt sich sich dann sukzessive bei Durchführung von Ein- und Auskuppelvorgängen immer dann, wenn in der Reibungskupplung Verschleiß aufgetreten ist.

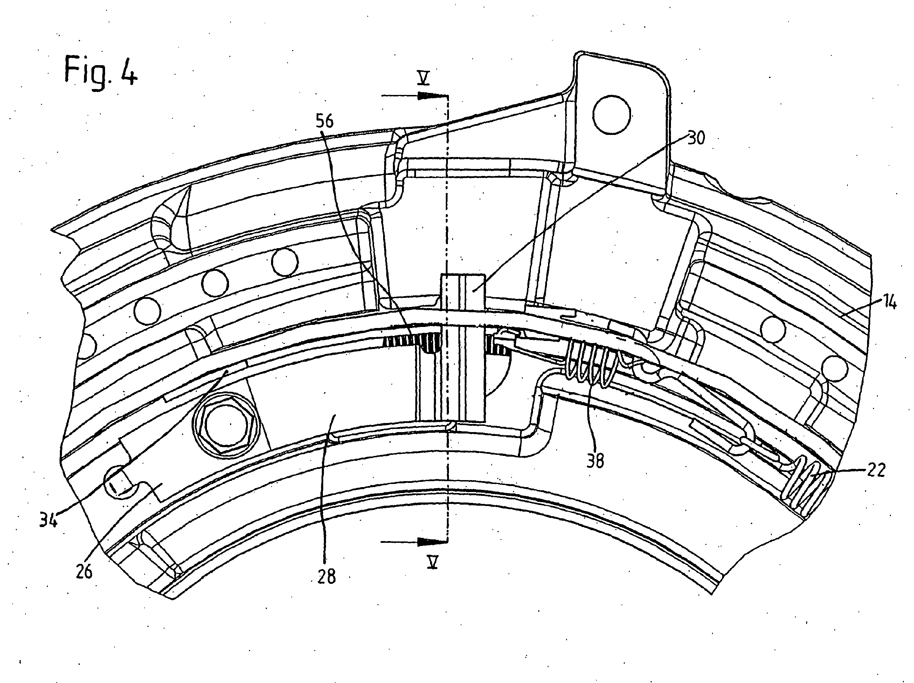

Eine alternative Ausgestaltungsform einer erfindungsgemäßen Druckplattenbaugruppe ist in den Fig. 4 bis 6 dargestellt. Bei dieser Ausgestaltungsform umfasst die Rückhalteanordnung 50 zum einen am Arretierschieber 34 an der bezüglich der Anpressplatte 14 sich abstützenden Seite 44 desselben eine Verzahnungsformation 52, und umfasst zum anderen an der Anpressplatte 14 bzw. einem daran vorgesehenen bzw. getragenen Abstützteil 54 eine Gegen-Verzahnungsformation 56. Durch die Vorspannwirkung der Vorspannfeder 38 wird der Arretierschieber 34 nach Art eines Keils in den Zwischenraum zwischen dem Blockier/Erfassungs-Abschnitt 30 und dem Abstützteil 54 bzw. der Anpressplatte 14 gezogen, so dass hier eine Art Klemmwirkung erzeugt wird, durch welche zwangsweise die Verzahnungsformation 52 in Eingriff mit der Gegen-Verzahnungsformation 56 gelangt. Es wird durch diese im Bereich Verzahnungen 52, 56 erzeugte Eingriffswirkung ein den Arretierschieber 34 gegen Bewegung in Umfangsrichtung blockierender Formschluss erzeugt. Erst wenn verschleißbedingt der Blockier/Erfassungs-Abschnitt 30 vom Arretierschieber 34 abhebt bzw. diesen freigibt, können unter der Vorspannwirkung der Feder 38 die Zähne bzw. Zahnflanken der Verzahnungen 52, 56 aneinander abgleiten und der Arretierschieber 34 kann sich verschieben, bis er mit seiner Seite 46 wieder am Blockier/Erfassungs-Abschnitt zur Anlage kommt. In entsprechender Weise kann bei einem Auskuppelvorgang der Nachstellring 18 sich in Umfangsrichtung wieder verdrehen, bis er in Anlage am Blockierabschnitt 40 gelangt.

Bei der in den Fig. 4 bis 6 dargestellten Ausgestaltungsform muss darauf geachtet werden, dass der Flankenwinkel der Verzahnungen 52, 56 oder zumindest einer dieser Verzahnungen größer ist als der Reibwinkel, d. h. dass durch die in Umfangsrichtung gerichtete Krafteinwirkung der Rückstellfeder 38 die Verzahnungen aneinander abgleiten können. Grundsätzlich ist auch eine Konfiguration mit steileren Flanken möglich, wobei dann jedoch Axialschwingungen dazu genutzt werden müssen, den Verzahnungseingriff zu lösen. Ferner kann bei dieser Ausgestaltungsform ggf. auf die Feder 22, durch welche der Nachstellring 20 zur Drehbewegung beaufschlagt ist, verzichtet werden. Alleine durch das Wirksamwerden der Verzahnungen 52, 56 kann ein Zurücklaufen des Nachstellrings verhindert werden. Die Drehrichtung für-den Nachstellring ist vorgegeben durch die Bewegungsrichtung des mit diesem im Bereich des Blockierabschnitts 40 zusammenwirkenden Arretierschiebers 34.

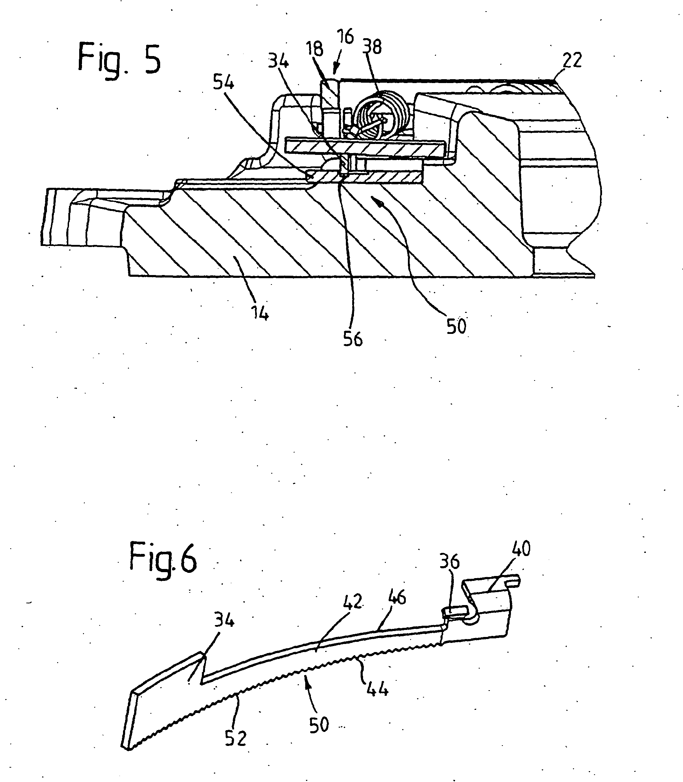

Bei den vorangehend beschriebenen Ausgestaltungsformen erkennt man, dass die Verschleißnachstellung stufenartig erfolgen wird, da der die Nachstellbewegung des Nachstellrings 18 vorgebende Arretierschieber bei Auftreten von Verschleiß sich inkrementartig bewegen kann, nämlich entweder entsprechend dem Umfangsabstand zwischen zwei Rückhaltestufen 48 des Arretierschiebers 34 gemäß Fig. 3 oder gemäß dem Abstand zwischen zwei Zähnen bei dem Arretierschieber 34 der Fig. 6.

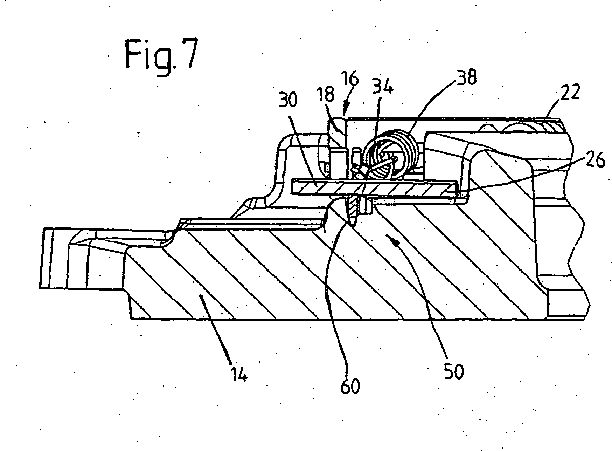

In Fig. 7 ist eine Ausgestaltungsform gezeigt, bei welcher trotz des Vorhandenseins einer Rückhalteanordnung 50 eine kontinuierliche, also stufenlose Verlagerung des Arretierschiebers 34 ermöglicht ist. Man erkennt in Fig. 7, dass in der Anpressplatte 14 eine den Arretierschieber 34 aufnehmende bzw. in Umfangsrichtung führende Nut oder Einsenkung 60 vorgesehen ist, die im dargestellten Ausgestaltungsbeispiel zu ihrem Nutgrund hin sich verjüngend ausgebildet ist. Selbstverständlich kann diese Nut 60 auch in einem zusätzlichen Einlege- oder Abstützteil ausgebildet sein. Durch die Vorspannwirkung der Feder 38 wird der Arretierschieber 34 in den zwischen dem Blockier/Erfassungs-Abschnitt 30 und der Anpressplatte 14 gebildeten Zwischenraum gezogen, so dass aufgrund der Keilform des Arretierschiebers 34, welcher hier weder Verzahnungen noch Stufen oder dergleichen aufweisen muss, eine diesen in die Nut 60 einpressende Kraft erzeugt wird. Der Arretierschieber 34 wird somit reibschlüssig in der Nut 60 gehalten, so dass eine der Vorspannkraft der Feder 38 entgegenwirkende Rückhaltekraft erzeugt wird und die durch den Arretierschieber 34 auf den Blockier/Erfassungs-Abschnitt ausgeübte Kraft entsprechend vermindert ist. Bei Anstoßen des Arretier/Erfassungs-Abschnitts 30 an dem in der Fig.1 erkennbaren Anschlag 32 wird der Arretierschieber 34,freigegeben und kann nunmehr der Vorspannkraft der Feder 38 folgend sich einhergehend mit der Verlagerung des Blockier/Erfassungs-Abschnitts 30 in Umfangsrichtung bewegen, so dass der Blockier/Erfassungs-Abschnitt 30 dann wieder gegen Zurückbewegung in Richtung auf die Anpressplatte 14 zu arretiert ist. Auch hier ist es vorteilhaft, wenn der Keilwinkel, welcher durch die sich verjüngende Nut 60 gebildet ist, größer als der Reibwinkel ist, da ansonsten eine Selbsthemmung entstehen könnte. Selbstverständlich ist es hier auch möglich, den Arretierschieber 34 mit entsprechender Keilform auszugestalten.

Vorangehend sind verschiedene Möglichkeiten beschrieben worden, mit welchen durch eine Rückhalteanordnung dafür gesorgt werden kann, dass die Vorspannwirkung einer das Arretierelement bzw. den Arretierschieber beaufschlagenden Vorspannfeder in einem Zustand, in welchem akitv eine Verlagerung des Blockier/Erfassungs-Elements bezüglich der Anpressplatte nicht auftritt, zumindest teilweise kompensiert wird. Erst dann, wenn aus einem derartigen Ausgangszustand das Blockier/Erfassungs-Element weiter ausgelenkt wird, beispielsweise auch über ein bestimmtes Ausmaß hinaus ausgelenkt wird, wird die Rückhaltewirkung der Rückhalteanordnung aufgehoben, und das Arretierelement kann sich in Umfangsrichtung verlagern.

Es ist selbstverständlich, dass in verschiedenen Bereichen die vorangehend beschriebene Druckplattenbaugruppe anders ausgebildet sein kann. So kann beispielsweise die Blockierung des Nachstellrings 18 gegen Drehbewegung direkt durch das Blockier/Erfassungs-Element erfolgen. Dazu kann dieses den Nachstellring 18 übergreifen, so dass zwischen dem Blockier/Erfassungs-Abschnitt und der Anpressplatte 14 der Nachstellring 18 geklemmt ist. Bei Auftreten von Verschleiß bewegt sich der Blockier/Erfassungs-Abschnitt 30 vom Nachstellring 18 weg bzw. beaufschlagt diesen nicht mehr, so dass nunmehr beispielsweise der Nachstellring 18 in Umfangsrichtung gedreht werden kann, bis er wieder in Anlage am Blockier/Erfassungs-Abschnitt 30 kommt. In diesem Falle ist der Blockierabschnitt 40 am Arretierschieber 34 nicht erforderlich.

## Patentansprüche

1. Dmckplattenbaugmppe, umfassend:
- eine Gehäuseanordnung (12),
- eine in der Gehäuseanordnung (12) in Richtung einer Drehachse bewegbar gehaltene Anpressplatte (14),
- eine sich bezüglich der Gehäuseanordnung (12) und der Anpreßplatte (14) abstutzende Kraftbeaufschlagungunardnung, vorzugsweise Kraftspeicher,
- eine Verschleißnachstellvorrichtung (16) im Kraftübertragungsweg zwischen der Anpressplatte (14) und der Kraftbeaufschlagungxanadnung, umfassend wenigstens ein zur Verschteißnachstetfung verlagerbares Nachstellelement (18).
- ein an der Anpressplatte vorgesehenes BlockierlErfassungs-Element (26), das mit einem Etfassungsabschnitt bei Auftreten von Verschleiß in Anlage an einem Anschlag (32) kommen kann und bezüglich der Anpressplatte (14) bewegbar ist,
- ein keilartiges Arretierelement (34), welches das Blockiert Erfassungs-Element (26) nach Bewegung bezüglich der Anpressplatte (14) gegen Rückbewegung arretiert, wobei das Arretierelement (34) durch eine Vorspannanordnung (38) in Richtung zu einem das Blockier/Erfassungs-Element (26) gegen Rückbewegung arretierenden Zustand vorgespannt ist,
**dadurch** gekenntzeichnet
dass die Druckplattenbaugruppe, weiterhin umfaßt:
- eine Rückhaltunordnung (50), welche der Vorspannwirkung der Vorspannanondnung (38) zumindest in einem Zustand entgegenwirkt, in welchem das Bbekier/Erfassungs-Element (26) aus einer durch das Arretierelement (34) arretierten Lage bezüglich der Anpressplatte (14) im Wesentlichen nicht herausbewegt ist.

2. Druckplattenbaugruppe nach Anspruch 1, **dadurch gekennzeichnet, dass** die Rückhalteanordnung (50) der Vorspannwirkung durch Formschluss entgegenwirkt.

3. Druckplattenbaugruppe nach Anspruch 2,
**dadurch gekennzeichnet, dass** die Rückhalteanordnung (50) einen - stufenartig sich verjüngenden Keilbereich (42) des Arretierelements. (34) umfasst, wobei an dem Arretierelement (34) vorgesehene Rückhaltestufen (48) in Anlage an dem Blockier/Erfassungs-Element (26) kommen können.

4. Druckptattenbaugruppe nach Anspruch 2;
**dadurch gekennzeichnet, dass** das Arretierelement (34) an seinem bezüglich der Anpressplatte abgestützten Bereich (44) eine Verzahnungsformation (52) aufweist und dass an der Anpressplatte (14) oder einem daran getragenen Bauteil (54) eine mit der Verzahn-ungsformation (52) in Eingriff stehende oder bringbare Gegen-Verzahnungsformation (56) ausgebildet ist.

5. Druckplattenbaugruppe nach Anspruch 1,
**dadurch gekennzeichnet, dass** die Rückhalteanordnung (50) der Vorspannwirkung durch.Reibschluss entgegenwirkt.

6. Druckplattenbaugruppe nach Anspruch 5,
**dadurch gekennzeichnet, dass** an der Anpressplatte (14) oder einen daran getragenen Bauteil eine das Arretierelement (34) aufnehmende Nut (60) vorgesehen ist, in welche das Arretierelement (34) zumindest im Arretierzustand reibschlüssig eingreift.

7. Druckplattenbaugruppe nach Anspruch 6,
**dadurch gekennzeichnet, dass** die Nut (60) zu ihrem Nutgrund hin sich verjüngend ausgebildet ist.

8. Druckplattenbaugruppe nach einem der Ansprüche 1 bis 7,
**dadurch gekennzeichnet, dass** das Blockier/Erfassungs-Element (34) einen an der Anpressplatte (14) festgelegten blattfederartig ausgebildeten Körperabschnitt (28) aufweist, von welchem ein in Anlage an dem Anschlag (32) bringbarer Blockier/Erfassungs-Abschnitt (30) ausgeht, wobei das Arretierelement (34) mit dem Blockier/Erfas- _ sungs-Element (26) im Bereich des Blockier/Erfassungs-Abschnitts (30) zusammenwirkt.

9. Reibungskupplung, umfassend eine Druckplattenbaugruppe (10) nach einem der vorhergehenden Ansprüche.

## Claims

1. Pressure plate subassembly, comprising:
- a housing arrangement (12),
- a press-on plate (14) held in the housing arrangement (12) movably in the direction of an axis of rotation,
- a force-applying action arrangement, preferably energy accumulator, supported with respect to the housing arrangement (12) and to the press-on plate (14),
- a wear adjustment device (16) in the force transmission path between the press-on plate (14) and the force-applying action arrangement, comprising at least one adjustment element (18) displaceable for wear adjustment,
- a blocking/gripping element (26) which is provided on the press-on plate and which, when wear occurs, can come with a gripping portion into bearing contact against a stop (32) and is movable with respect to the press-on plate (14),
- a wedge-like detaining element (34) which detains the blocking/gripping element (26), after movement with respect to the press-on plate (14), against return movement, the detaining element (34) being prestressed by a prestressing arrangement (38) in the direction of a state detaining the blocking/gripping element (26) against return movement, **characterized**
**in that** the pressure plate subassembly comprises furthermore,
- a retention arrangement (50) which counteracts the prestressing action of the prestressing arrangement (38) at least in a state in which the blocking/gripping element (26) is essentially not moved out of a position, detained by the detaining element (34), with respect to the press-on plate (14).

2. Pressure plate subassembly according to Claim 1, **characterized in that** the retention arrangement (50) counteracts the prestressing action by means of a form fit.

3. Pressure plate subassembly according to Claim 2, **characterized in that** the retention arrangement (50) comprises a wedge region (42), tapering in a step-like manner, of the detaining element (34), retention steps (48) provided on the detaining element (34) being incapable of coming into bearing contact against the blocking/gripping element (26).

4. Pressure subassembly according to Claim 2, **characterized in that** the retaining element (34) has a toothing formation (52) on its region (44) supported with respect to the press-on plate, and **in that** a countertoothing formation (56) which is in or can be brought into engagement with the toothing formation (52) is formed on the press-on plate (14) or a component (54) carried on the latter.

5. Pressure plate subassembly according to Claim 1, **characterized in that** the retention arrangement (50) counteracts the prestressing action by means of frictional connection.

6. Pressure plate subassembly according to Claim 5, **characterized in that**, on the press-on plate (14) or a component carried on it, a groove (60) is provided which receives the detaining element (34) and into which the detaining element (34) engages frictionally at least in the detention state.

7. Pressure plate subassembly according to Claim 6, **characterized in that** the groove (60) is designed to taper towards its groove bottom.

8. Pressure plate subassembly according to one of Claims 1 to 7, **characterized in that** the blocking/gripping element (34) has a body portion (28) which is designed in the form of a leaf spring and is secured to the press-on plate (14) and from which emanates a blocking/gripping portion (30) capable of being brought into bearing contact against the stop (32), the detaining element (34) cooperating with the blocking/gripping element (26) in the region of the blocking/gripping portion (30).

9. Friction clutch, comprising a pressure plate subassembly (10) according to one of the preceding claims.

## Revendications

1. Module de plateau de pression, comprenant :
- un agencement de boîtier (12),
- un plateau de pressage (14) maintenu mobile dans l'agencement de boîtier (12) dans la direction d'un axe de rotation,
- un agencement de sollicitation par force, de préférence un accumulateur de force, s'appuyant par rapport à l'agencement de boîtier (12) et au plateau de pressage (14),
- un dispositif de rattrapage de l'usure (16) dans la voie de transfert de force entre le plateau de pressage (14) et l'agencement de sollicitation de force, comprenant au moins un élément de rattrapage (18) pouvant être déplacé en vue du rattrapage de l'usure,
- un élément de blocage/saisie (26) prévu sur le plateau de pressage, lequel peut venir en appui contre une butée (32) par une portion de saisie lors de l'apparition d'une usure, et peut être déplacé par rapport au plateau de pressage (14),
- un élément de verrouillage (34) de type clavette, qui verrouille l'élément de blocage/saisie (26) après son mouvement par rapport au plateau de pressage (14) pour empêcher son mouvement de retour, l'élément de verrouillage (34) étant précontraint par un agencement de précontrainte (38) dans la direction d'un état verrouillant l'élément de blocage/saisie (26) pour empêcher son mouvement de retour,
**caractérisé en ce que**
le module de plateau de pression comprend en outre
- un agencement de retenue (50) qui agit à l'encontre de l'effet de précontrainte de l'agencement de précontrainte (38) au moins dans un état, dans lequel l'élément de blocage/saisie (26) n'est sensiblement pas déplacé hors d'une position par rapport au plateau de pressage (14) verrouillée par l'élément de verrouillage (34).

2. Module de plateau de pression selon la revendication 1,
**caractérisé en ce que** l'agencement de retenue (50) agit à l'encontre de l'effet de précontrainte par engagement par coopération de forme.

3. Module de plateau de pression selon la revendication 2,
**caractérisé en ce que** l'agencement de retenue (50) comprend une région de clavette (42) de l'élément de verrouillage (34) se rétrécissant par échelons, des échelons de retenue (48) prévus sur l'élément de verrouillage (34) pouvant venir en appui contre l'élément de blocage/saisie (26).

4. Module de plateau de pression selon la revendication 2,
**caractérisé en ce que** l'élément de verrouillage (34) présente, au niveau de sa région (44) supportée par rapport au plateau de pressage, une formation de denture (52) et **en ce qu'**une formation de denture conjuguée (56) en prise ou pouvant être amenée en prise avec la formation de denture (52) est réalisée sur le plateau de pressage (14) ou sur un composant (54) porté par celui-ci.

5. Module de plateau de pression selon la revendication 1,
**caractérisé en ce que** l'agencement de retenue (50) agit à l'encontre de l'effet de précontrainte par engagement par friction.

6. Module de plateau de pression selon la revendication 5,
**caractérisé en ce qu'**une rainure (60) recevant l'élément de verrouillage (34) est prévue sur le plateau de pressage (14) ou sur un composant porté par celui-ci, dans laquelle rainure l'élément de verrouillage (34) vient en prise par engagement par friction au moins dans l'état de verrouillage.

7. Module de plateau de pression selon la revendication 6,
**caractérisé en ce que** la rainure (60) est réalisée de manière à se rétrécir vers sa base de rainure.

8. Module de plateau de pression selon l'une quelconque des revendications 1 à 7,
**caractérisé en ce que** l'élément de blocage/saisie (26) présente une portion de corps (28) réalisée sous forme de ressort à lame, fixée sur le plateau de pressage (14), depuis laquelle part une portion de blocage/saisie (30) pouvant être amenée en appui contre la butée (32), l'élément de verrouillage (34) coopérant avec l'élément de blocage/saisie (26) dans la région de la portion de blocage/saisie (30).

9. Embrayage à friction, comprenant un module de plateau de pression (10) selon l'une quelconque des revendications précédentes.
